# EUROPEAN PATENT APPLICATION

(11) **EP 3 674 901 A1**
(43) Date of publication of application: **01.07.2020**
(21) Application number: 19217265.8
(22) Date of filing: 17.12.2019
(51) Int. Cl.: G06F 11/07, G05B 23/02

(54) **HOUSEHOLD APPLIANCE CONTROL SYSTEM, HOUSEHOLD APPLIANCE CONTROL METHOD, STORAGE MEDIUM AND HOUSEHOLD APPLIANCE**

(30) Priority: 26.12.2018 CN 201811608835
(71) Applicant: BSH Hausgeräte GmbH, 81739 München (DE)
(72) Inventor: Yang, Jia, Nanjing, 210046 (CN); Chen, Xiaohui, NANJING, 210046 (CN)

(57) **Abstract**

A household appliance control system, a household appliance control method, a storage medium and a household appliance are provided. The household appliance control system includes: a first operating system, configured to send a write signal according to a preset period; and a second operating system, including a watchdog module. The watchdog module is configured to obtain the write signal sent according to the preset period. When the watchdog module does not obtain the write signal within the preset period, the watchdog module sends a restart signal to the first operating system. By means of the foregoing solution, when the first operating system breaks down, the watchdog module of the second operating system can trigger an operation of restarting the first operating system, so that the first operating system returns to normal operation, ensuring normal use of a household appliance.

## Description

### BACKGROUND

### Technical Field

The present invention relates to the field of intelligent household appliance technologies, and in particular, to a household appliance control system, a household appliance control method, a storage medium and a household appliance.

### Related Art

With the development of Internet technologies, intelligent household appliances have become a development trend in the current household appliance industry. Supported by Internet technologies, all kinds of household appliances are becoming more intelligent, have an Internet function, may perform human-machine interaction, and further have a camera, a microphone and other devices, to implement some functions that conventional household appliances cannot implement.

However, much as intelligent household appliances have brought convenience to our life, more problems have emerged. Due to fast version update, uncontrollable application market and other factors, operating systems of intelligent household appliances frequently break down after long-term use. For household appliances with a longer service life, this problem is more obvious, seriously affecting normal use of the household appliances.

Therefore, a new household appliance control system is needed to ensure that a household appliance can return to normal operation after a breakdown.

### SUMMARY

The present invention resolves the technical problem that a first operating system of a household appliance control system frequently breaks down after long-term use, affecting normal use of a household appliance.

Embodiments of the present invention provide a household appliance control system, including: a first operating system, configured to send a write signal according to a preset period; and a second operating system, including a watchdog module. The watchdog module is configured to obtain the write signal. When the watchdog module does not obtain the write signal within the preset period, the watchdog module sends a restart signal to the first operating system.

Compared with the prior art, an advantage of the embodiments of the present invention is that, when the first operating system breaks down, the watchdog module of the second operating system can trigger an operation of restarting the first operating system, so that the first operating system returns to normal operation, ensuring normal use of a household appliance.

Optionally, the watchdog module includes: a start module, suitable for sending a start signal; a receiving module, configured to receive the start signal and the write signal sent according to the preset period; a timing module, suitable for timing, where after the receiving module receives the write signal within the preset period, the timing module restarts timing; a determining module, configured to determine whether single duration of the timing module exceeds the preset period; and an output module, where when the determining module determines that the single duration of the timing module exceeds the preset period, the output module sends a restart signal to the first operating system. In this way, when the first operating system fails or breaks down, the receiving module does not receive the write signal all the time, causing that duration of the timing module exceeds the preset period. The determining module can discover this problem in time and then the output module quickly responds and performs an operation of restarting the first operating system, so that the first operating system returns to normal operation.

Optionally, the watchdog module further includes: a prompt module, where after the output module sends the restart signal to the first operating system, the prompt module sends a prompt signal. The first operating system further includes: a prompt receiving module, suitable for receiving the prompt signal; and a user interface module, suitable for displaying restart information on the user interface module after the prompt receiving module receives the prompt signal. In this way, during the process of performing the operation of restarting the first operating system, a user can obtain status information of the first operating system through the user interface module, to alleviate the user's anxiety, thereby improving user experience.

Optionally, the first operating system includes: a write module, suitable for sending the write signal to the watchdog module according to the preset period. When the first operating system fails or breaks down, the write module stops sending the write signal to the watchdog module. In this way, whether the write module normally performs the operation of sending the write signal can be used to determine whether the first operating system fails or breaks down.

Optionally, the first operating system is a user operating system, generates a corresponding function control signal according to a user input or a cloud instruction, and is responsible for an intelligent function of the intelligent refrigerator. Specifically, the focus is on supporting the multimedia function of the intelligent refrigerator and interaction with the cloud.

Optionally, the first operating system is an Android system. The Android system has high platform openness, and there are many developers of relevant applications. Therefore, the Android system enables the intelligent household appliance to install more applications relevant to the household appliance, thereby improving user experience. In addition, the Android system is more suitable for a multimedia scenario.

Optionally, the second operating system is a hardware control system, suitable for driving, according to the function control signal generated by the first operating system, a function module of the household appliance to perform a corresponding operation. In addition, the second operating system is further responsible for basic functions of the intelligent refrigerator, such as status monitoring, firmware upgrade, data collection, and the like. Optionally, the second operating system is a Linux system. The Linux system is cheap and has high customizability, high compatibility and other advantages, which can improve user experience. The Linux system is of higher security and suitable for implementing conventional functions of household appliances.

Optionally, the household appliance control system further includes: a virtual machine system, configured to run the first operating system and the second operating system. In this way, the first operating system and the second operating system can share one set of basic physical hardware.

Optionally, the virtual machine system further includes a communications interface, suitable for implementing signal interaction between the first operating system and the second operating system. In this way, the receiving module can receive the write signal sent by the first operating system according to the preset period. In addition, when the first operating system fails or breaks down, through the communications interface, the second operating system can receive the restart signal sent by the output module of the watchdog module, and then restart the first operating system to return to normal operation.

Optionally, the preset period is 45 to 60 seconds. In this way, on one hand, it is ensured that when the first operating system fails or breaks down, the watchdog module can quickly respond to restart the first operating system, improving user experience. On the other hand, this helps to reduce the pressure on the write module and the watchdog module.

The embodiments of the present invention further provide a household appliance control method, including: providing a household appliance control system, where the household appliance control system includes a first operating system and a second operating system and the second operating system includes a watchdog module; sending a write signal according to a preset period through the first operating system; and obtaining the write signal through the watchdog module of the second operating system. When the watchdog module does not obtain the write signal within the preset period, the watchdog module sends a restart signal to the first operating system.

Compared with the existing household appliance control method, an advantage of the embodiments of the present invention is that, when the first operating system fails or breaks down, the watchdog module can automatically restart the first operating system to ensure steady operation of the first operating system.

Optionally, the watchdog module (400) obtaining the write signal includes: starting the watchdog module (400); and obtaining the write signal sent according to the preset period and starting timing. In this way, the watchdog module monitors an operating status of the first operating system.

Optionally, after the watchdog module (400) obtaining the write signal, the method further includes: the watchdog module (400) determining whether single duration exceeds the preset period.

Optionally, after the watchdog module (400) sending a restart signal to the first operating system (200), the method further includes: the watchdog module (400) sending a prompt signal; and the first operating system (200) receiving the prompt signal and displaying restart information. In this way, when the first operating system is restarting, a user can know a restarting process of the first operating system.

Optionally, when the first operating system (200) fails or breaks down, the first operating system (200) stops sending the write signal to the watchdog module (400).

Optionally, the first operating system is a user operating system.

Optionally, the first operating system is an Android system. The Android system has high platform openness and provides a very broad and free development environment for developers of relevant applications, which helps to implement new functions of the intelligent household appliance.

Optionally, the second operating system is a hardware control system.

Optionally, the second operating system is a Linux system. The Linux system has low costs, runs steadily, and is less prone to a breakdown.

Optionally, the household appliance control system further includes: a virtual machine system. Both the first operating system and the second operating system are in the virtual machine system. Through the virtual machine system, the first operating system and the second operating system can control function modules of the intelligent refrigerator.

Optionally, the preset period is 45 to 60 seconds. The preset period is appropriate, which, on one hand, ensures that the watchdog module can monitor the first operating system so as to discover any exception of the first operating system in time, and on the other hand, avoids wasting resources and prevents the watchdog module from performing operations excessively frequently.

The embodiments of the present invention further provide a storage medium storing a computer instruction. When being run, the computer instruction performs the steps of the household appliance control method described above.

The embodiments of the present invention further provide a household appliance, including a memory and a processor. The memory stores a computer instruction capable of being run in the processor. When running the computer instruction, the processor performs the steps of the household appliance control method described above.

### BRIEF DESCRIPTION OF THE DRAWINGS

FIG. 1 is a schematic structural diagram of a household appliance control system according to an embodiment of the present invention;
FIG. 2 is a schematic structural diagram of a first operating system shown in FIG. 1; and
FIG. 3 is a schematic structural diagram of a watchdog module shown in FIG. 1.

### DETAILED DESCRIPTION

To make the objectives, features, and advantages of the present invention more clear and comprehensible, specific embodiments of the present invention are described in detail below with reference to the accompanying drawings.

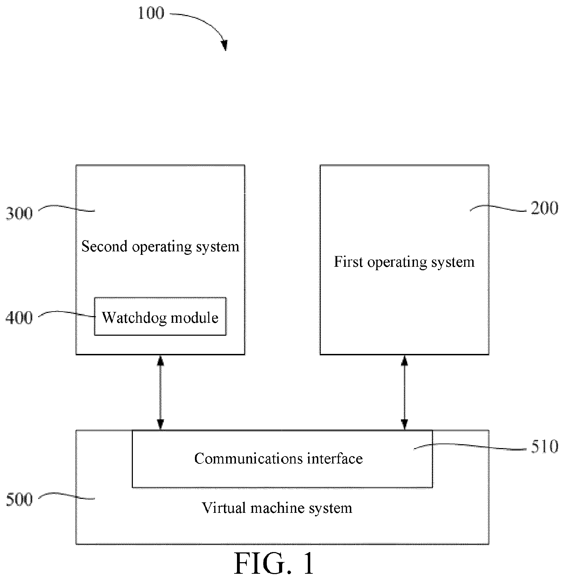

FIG. 1 is a schematic structural diagram of a household appliance control system 100 according to an embodiment of the present invention.

The solution in this embodiment may be applied to a scenario in which it is needed to control an intelligent household appliance with a communications function, such as a washing machine, a refrigerator, an air conditioner, a microwave oven, a television set, or a cooker hood. In FIG. 1, an intelligent refrigerator is used as an example of the household appliance for description.

Referring to FIG. 1, a household appliance control system 100 includes: a first operating system 200, configured to send a write signal according to a preset period; and a second operating system 300, including a watchdog module 400. The watchdog module 400 is configured to obtain the write signal sent according to the preset period. When the watchdog module 400 does not obtain the write signal within the preset period, the watchdog module 400 sends a restart signal to the first operating system 200.

When the first operating system 200 breaks down, the watchdog module 400 of the second operating system 300 can trigger an operation of restarting the first operating system 200, so that the first operating system 200 returns to normal operation, ensuring normal use of the household appliance.

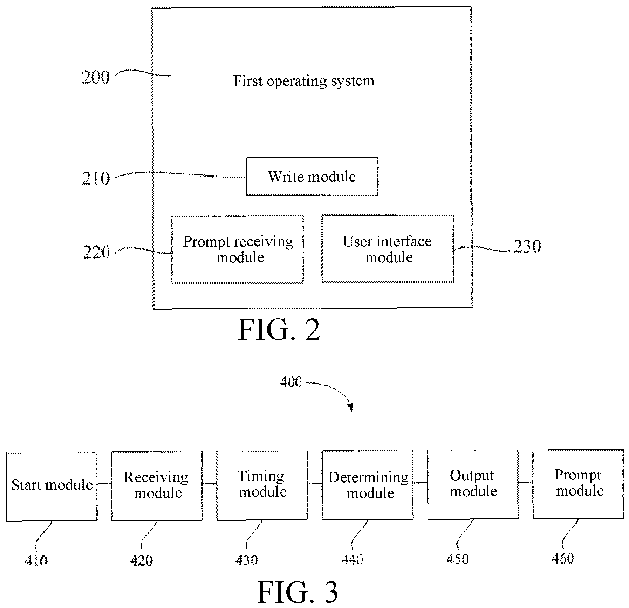

In this embodiment, as shown in FIG. 2, the first operating system 200 includes: a write module 210, suitable for sending the write signal to the watchdog module 400 according to the preset period. When the first operating system 200 fails or breaks down, the write module 210 stops sending the write signal to the watchdog module 400.

In this way, whether the write module 210 normally performs the operation of sending the write signal can be used to determine whether the first operating system 200 fails or breaks down.

In this embodiment, the preset period is 45 to 60 seconds. If the preset period is greater than 60 seconds, when the first operating system 200 fails or breaks down, the watchdog module 400 responds at a slow speed, and consequently, the operation of restarting the first operating system 200 responds at a slow speed, affecting user experience. If the preset period is less than 45 seconds, pressure is unnecessarily added on the write module 210 and the watchdog module 400.

The first operating system 200 is a user operating system.

In some embodiments, the first operating system 200 may generate a corresponding function control signal according to a user input or a cloud instruction.

For example, the intelligent refrigerator is provided with a human-machine interaction interface. A user may input a temperature parameter of the refrigerator on the human-machine interaction interface. The first operating system 200 generates a corresponding function control signal according to the input temperature parameter.

In some embodiments, the first operating system 200 is responsible for an intelligent function of the intelligent refrigerator. Specifically, the focus is on supporting the multimedia function of the intelligent refrigerator and interaction with the cloud.

For example, a user may choose a cooking video title that the user is interested on the human-machine interaction interface of the intelligent refrigerator. The first operating system 200 sends a corresponding video request signal to a cloud server associated in advance, and after downloading the corresponding video from the cloud server through network connection, plays the video on a display screen of the intelligent refrigerator.

In this embodiment, the first operating system 200 is an Android system. The Android system has high platform openness, and there are many developers of relevant applications. Therefore, the Android system enables the intelligent household appliance to install more applications relevant to the household appliance, thereby improving user experience. In addition, the Android system is more suitable for a multimedia scenario.

In this embodiment, as shown in FIG. 1, the second operating system 300 is a hardware control system.

In some embodiments, the second operating system 300 is suitable for driving, according to the function control signal generated by the first operating system 200, the function module of the household appliance to perform a corresponding operation. For example, after receiving the function control signal including the temperature parameter, the second operating system 300 drives a corresponding function module (for example, a compressor) to work, so as to adjust the temperature in the refrigerator.

In some embodiments, the second operating system 300 is responsible for basic functions of the intelligent refrigerator, such as status monitoring, firmware upgrade, data collection, and the like.

In this embodiment, the second operating system 300 is a Linux system. The Linux system is cheap and has high customizability, high compatibility and other advantages, which can reduce costs and improve user experience. The Linux system is of higher security and suitable for implementing conventional functions of household appliances.

In this embodiment, as shown in FIG. 3, the watchdog module 400 includes a start module 410, a receiving module 420, a timing module 430, a determining module 440, an output module 450, and a prompt module 460.

The start module 410 is suitable for sending a start signal. In this way, the watchdog module 400 is in a working state.

The receiving module 420 is configured to receive the start signal and the write signal sent by the first operating system 200 according to the preset period.

After the receiving module 420 receives the start signal, the receiving module 420 enters a working state. In this way, the receiving module 420 starts receiving the write signal sent according to the preset period.

The timing module 430 is suitable for timing and when the receiving module 420 receives the write signal within the preset period, the timing module 430 restarts timing.

In this way, the timing module 430 can measure a time interval in the process of the receiving module 420 receiving the write signal.

The determining module 440 is configured to determine whether single duration of the timing module 430 exceeds the preset period.

The output module 450 is suitable for sending a restart signal to the first operating system 200 after the determining module 440 determines that the single duration of the timing module 430 exceeds the preset period.

In this way, when the first operating system 200 fails or breaks down, the receiving module 420 does not receive the write signal all the time, and duration of the timing module 430 exceeds the preset period. The determining module 440 can discover this problem in time and then the output module 450 quickly responds and performs an operation of restarting the first operating system 200, so that the first operating system 200 returns to normal operation.

The prompt module 460 is suitable for sending a prompt signal after the output module 450 sends the restart signal to the first operating system 200.

In this embodiment, as shown in FIG. 2, the first operating system 200 further includes: a prompt receiving module 220, suitable for receiving the prompt signal sent by the prompt module 460; and a user interface module 230, suitable for displaying restart information on the user interface module 230 after the prompt receiving module 220 receives the prompt signal.

In this way, during the process of performing the operation of restarting the first operating system 200, a user can obtain status information of the first operating system 200 through the user interface module 230, to alleviate the user's anxiety, thereby improving user experience.

In this embodiment, as shown in FIG. 1, the household appliance control system 100 further includes: a virtual machine system 500, configured to run the first operating system 200 and the second operating system 300.

The virtual machine system 500 is an intermediary software layer running between a physical server and an operating system and may allow a plurality of operating systems and applications to share one set of basic physical hardware.

In this embodiment, the virtual machine system 500 further includes a communications interface 510, suitable for implementing signal interaction between the first operating system 200 and the second operating system 300.

In this way, through the communications interface 510, the receiving module 420 of the watchdog module 400 can receive the write signal sent by the first operating system 200 according to the preset period. In addition, when the first operating system 200 fails or breaks down, through the communications interface 510, the second operating system 300 can receive the restart signal sent by the output module 450 of the watchdog module 400, and then restarts the first operating system 200 to return to normal operation.

Referring to FIG. 1, the embodiments of the present invention further provide a household appliance control method, including: providing a household appliance control system 100, where the household appliance control system 100 includes a first operating system 200 and a second operating system 300 and the second operating system 300 includes a watchdog module 400; sending a write signal according to a preset period through the first operating system 200; and obtaining the write signal through the watchdog module 400 of the second operating system 300. When the watchdog module 400 does not obtain the write signal within the preset period, the watchdog module 400 sends a restart signal to the first operating system 200.

When the first operating system 200 fails or breaks down, the watchdog module 400 can automatically restart the first operating system 200 to ensure steady operation of the first operating system 200.

The first operating system 200 is a user operating system. In this embodiment, the first operating system 200 is an Android system. The Android system has high platform openness, and provides a very broad and free development environment for developers of relevant applications, which helps to implement new functions of the intelligent household appliance.

In this embodiment, when the first operating system 200 fails or breaks down, the first operating system 200 stops sending the write signal to the watchdog module 400.

In this embodiment, the preset period is 45 to 60 seconds. If the preset period is less than 45 seconds, the watchdog module 400 performs operations excessively frequently, which easily causes a waste of resources. If the preset period is greater than 60 seconds, it is difficult for the watchdog module 400 to discover any exception of the first operating system 200 in time, affecting the effect of the watchdog module 400 monitoring the first operating system 200.

The second operating system 300 is a hardware control system. In this embodiment, as shown in FIG. 1, the second operating system 300 is a Linux system. The Linux system has low costs, runs steadily, and is less prone to a breakdown.

In this embodiment, before the watchdog module 400 obtaining the write signal sent according to the preset period, the method further includes: starting the watchdog module 400.

In this embodiment, the watchdog module 400 obtaining the write signal sent according to the preset period further includes: the watchdog module 400 restarting timing.

In this embodiment, after the watchdog module 400 obtaining the write signal sent according to the preset period, the method further includes: the watchdog module 400 determining whether single duration exceeds the preset period. When the single duration exceeds the preset period, the watchdog module 400 sends a restart signal to the first operating system 200.

In this way, the watchdog module 400 monitors an operating status of the first operating system 200.

In this embodiment, after the watchdog module 400 sending a restart signal to the first operating system 200, the method further includes: the watchdog module 400 sending a prompt signal; and the first operating system 200 receiving the prompt signal and displaying restart information.

In this way, when the first operating system 200 is restarting, the user can know a restarting process of the first operating system 200.

In this embodiment, as shown in FIG. 1, the household appliance control system 100 further includes: a virtual machine system 500. Both the first operating system 200 and the second operating system 300 are in the virtual machine system 500.

When starting, the virtual machine system 500 allocates a proper capacity of memory, a central processor unit, a network, and a disk for each virtual machine, and loads client operating systems of all virtual machines. In this embodiment, through the virtual machine system 500, the first operating system 200 and the second operating system 300 can control function modules of the intelligent refrigerator.

In this embodiment, the virtual machine system 500 further includes a communications interface 510, suitable for transmitting the write signal sent according to the preset period between the watchdog module 400 and the second operating system 300.

In this way, the watchdog module 400 implements signal interaction with the first operating system 200, so that the watchdog module 400 monitors a status of the first operating system 200.

The embodiments of the present invention further provide a storage medium storing a computer instruction. When being run, the computer instruction performs the steps of the household appliance control method described above.

The embodiments of the present invention further provide a household appliance, including a memory and a processor. The memory stores a computer instruction capable of being run in the processor. When running the computer instruction, the processor performs the steps of the household appliance control method described above.

A person of ordinary skill in the art may understand that all or some of the steps of the methods in the embodiments may be implemented by a program instructing relevant hardware. The program may be stored in a computer readable storage medium. The storage medium may include: a ROM, a RAM, a disk, an optical disc, or the like.

Although the present invention is disclosed as above, the present invention is not limited thereto. Any person skilled in the art can make various variations or modifications without departing from the spirit and scope of the present invention. Therefore, the protection scope of the present invention shall be subject to the appended claims.

## Claims

1. A household appliance control system (100), **characterized by** comprising:
a first operating system (200), configured to send a write signal according to a preset period; and
a second operating system (300), comprising a watchdog module (400), wherein the watchdog module (400) is configured to obtain the write signal and when the watchdog module (400) does not obtain the write signal within the preset period, the watchdog module (400) sends a restart signal to the first operating system (200).

2. The household appliance control system (100) according to claim 1, **characterized in that** the watchdog module (400) comprises: a start module (410), suitable for sending a start signal; a receiving module (420), configured to receive the start signal and the write signal sent according to the preset period; a timing module (430), suitable for timing, wherein after the receiving module (420) receives the write signal within the preset period, the timing module (430) restarts timing; a determining module (440), configured to determine whether single duration of the timing module (430) exceeds the preset period; and an output module (450), wherein when the determining module (440) determines that the single duration of the timing module (430) exceeds the preset period, the output module (450) sends a restart signal to the first operating system (200).

3. The household appliance control system (100) according to claim 1 or 2, **characterized in that** the watchdog module (400) further comprises: a prompt module (460), wherein after the output module (450) sends the restart signal to the first operating system (200), the prompt module (460) sends a prompt signal, and that the first operating system (200) further comprises: a prompt receiving module (220), suitable for receiving the prompt signal; and a user interface module (230), suitable for displaying restart information on the user interface module (230) after the prompt receiving module (220) receives the prompt signal.

4. The household appliance control system (100) according to any one of claims 1 to 3, **characterized in that** the first operating system (200) comprises: a write module (210), suitable for sending the write signal to the watchdog module (400) according to the preset period, wherein when the first operating system (200) fails or breaks down, the write module (210) stops sending the write signal to the watchdog module (400).

5. The household appliance control system (100) according to any of the preceding claims, **characterized in that** the first operating system (200) is a user operating system.

6. The household appliance control system (100) according to any of the preceding claims, **characterized in that** the first operating system (200) is an Android system.

7. The household appliance control system (100) according to any of the preceding claims, **characterized in that** the second operating system (300) is a hardware control system.

8. The household appliance control system (100) according to any of the preceding claims, **characterized in that** the second operating system (300) is a Linux system.

9. The household appliance control system (100) according to any of the preceding claims, **characterized by** further comprising: a virtual machine system (500), configured to run the first operating system (200) and the second operating system (300).

10. The household appliance control system (100) according to any of the preceding claims, **characterized in that** the virtual machine system (500) further comprises a communications interface (510), suitable for implementing signal interaction between the first operating system (200) and the second operating system (300).

11. The household appliance control system (100) according to any of the preceding claims, **characterized in that** the preset period is 45 to 60 seconds.

12. A household appliance control method, **characterized by** comprising:
providing a household appliance control system (100), wherein the household appliance control system (100) comprises a first operating system (200) and a second operating system (300) and the second operating system (300) comprises a watchdog module (400);
sending a write signal according to a preset period through the first operating system (200); and
obtaining the write signal through the watchdog module (400) of the second operating system (300), wherein when the watchdog module (400) does not obtain the write signal within the preset period, the watchdog module (400) sends a restart signal to the first operating system (200).

13. The household appliance control method according to claim 12, **characterized in that** the watchdog module (400) obtaining the write signal comprises: starting the watchdog module (400); and
obtaining the write signal sent according to the preset period and starting timing.

14. The household appliance control method according to claim 12 or 13, **characterized in that** after the watchdog module (400) obtaining the write signal, the method further comprises: the watchdog module (400) determining whether single duration exceeds the preset period.

15. The household appliance control method according to claim 12, **characterized in that** after the watchdog module (400) sending a restart signal to the first operating system (200), the method further comprises:
the watchdog module (400) sending a prompt signal; and
the first operating system (200) receiving the prompt signal and displaying restart information.

16. The household appliance control method according to any one of claims 12 to 15, **characterized in that** when the first operating system (200) fails or breaks down, the first operating system (200) stops sending the write signal to the watchdog module (400).

17. The household appliance control method according to claims 12 to 16, **characterized in that** the first operating system (200) is a user operating system.

18. The household appliance control method according to claims 12 to 17, **characterized in that** the first operating system (200) is an Android system.

19. The household appliance control method according to claim 12, **characterized in that** the second operating system (300) is a hardware control system.

20. The household appliance control method according to claims 12 to 19, **characterized in that** the second operating system (300) is a Linux system.

21. The household appliance control method according to claim 12, **characterized in that** the household appliance control system (100) further comprises: a virtual machine system (500), configured to run the first operating system (200) and the second operating system (300).

22. The household appliance control method according to claim 12, **characterized in that** the preset period is 45 to 60 seconds.

23. A storage medium, storing a computer instruction, **characterized in that** when being run, the computer instruction performs the steps of the method according to any one of claims 12 to 22.

24. A household appliance, comprising a memory and a processor, wherein the memory stores a computer instruction capable of being run in the processor, **characterized in that** when running the computer instruction, the processor performs the steps of the method according to any one of claims 12 to 22.
